Europäisches Patentamt

European Patent Office

Office européen des brevets

(11) Publication number: **0 127 745 B1**

# EUROPEAN PATENT SPECIFICATION

(45) Date of publication of patent specification: **08.01.92**  (51) Int. Cl.⁵: **G06F 3/153**, G06F 3/13, G06K 15/00

(21) Application number: **84103723.7**

(22) Date of filing: **05.04.84**

(54) **A word processing system based on a data stream having integrated alphanumeric and graphic data.**

(30) Priority: **11.05.83 US 493403**

(43) Date of publication of application:
**12.12.84 Bulletin 84/50**

(45) Publication of the grant of the patent:
**08.01.92 Bulletin 92/02**

(84) Designated Contracting States:
**BE CH DE FR GB IT LI NL SE**

(56) References cited:
**GB-A- 1 330 748**
**US-A- 4 254 409**
**US-A- 4 338 599**

(73) Proprietor: **International Business Machines Corporation**
**Old Orchard Road**
**Armonk, N.Y. 10504(US)**

(72) Inventor: **Barnes, Johnny Gennie**
**11001 Bitteroot Circle**
**Austin Texas 78750(US)**
Inventor: **Chen, James Newman**
**13218 Broadmeade Avenue**
**Round Rock Texas 78664(US)**
Inventor: **Hayes, Gerald Edward**
**1334 Neans**
**Austin Texas 78758(US)**

(74) Representative: **Colas, Alain**
**Compagnie IBM France Département de Propriété Intellectuelle**
**F-06610 La Gaude(FR)**

EP 0 127 745 B1

## Description

Technical Field

The present invention relates to word processing systems having interactive display terminals, and more particularly to such systems with terminals having "character box" displays, i.e., displays which form the alphanumeric characters through the generation of such characters in "character boxes" on the display.

Background of the Invention

Word or text processing systems having interactive display terminals permitting an operator to extensively edit and format alphanumeric data which is, in turn, printed out on an associated printer have been in ever increasing demand in the office products and systems field. Since a great many letters, articles to be published and books require some graphic material to be formatted into documents along with the alphanumeric text, there has been a need for improved editing capability with respect to graphics on word processor displays as well as improved expedients for producing documents which contain graphics in addition to alphanumeric data. Improving capability of word processing systems to handle graphics has presented a problem. The best quality graphics is conventionally produced through plotters with styli which can access or address any point on the document and proceed in a vector to any other point on the document. However, conventional word processing systems with interactive display terminals generally operate the display terminal as a character generation or "character box" display. In such a display, an encoded representation of each of a font of characters is stored in a character generator memory, and as each character is to appear on the display during each display refresh cycle, the character generator memory is addressed and the coded representation of that particular character is taken from the memory and displayed in a particular and designated "character box" on the display. Similarly, most printers associated with existing word processing systems print their characters on a character by character basis. Such an association of a display terminal and printer is obviously a practical one since the data representation of a particular character in the display or editing level data stream may with minimum modification be utilized in the print level data stream to activate that particular character on the printer. Accordingly, in order to achieve desirable graphics capabilities in a word processing system, the graphics should be implementable in a character generation mode for display purposes and be printable on a character by character basis on the printer.

The following prior art is representative of the handling of graphics on various displays.

U.S. Patent 4, 246,578, I. Kawasaki et al, entitled "Pattern Generation Display System", and issued Jan. 20, 1981. this patent discloses a display on which both graphics and alphanumeric data may be shown. It does not use a character generator for the alphanumerics. Rather, all displayed material is generated through some sort of an All Points Addressable system.

US Patent 4.254.409, J.L. Busby, entitled : Control system for full line variable height and width character and symbol printing, and issued March 3,1981. This patent discloses a control system for modifying a conventional full width page printer to permit generation of different printed characters, symbols or graphic elements of different sizes in a single line. The control system allows the printer to be operated not only in a standard print mode, but also in a slew mode and in a print modification mode. This patent describes neither the use of a character generator for the alphanumeric nor the concept of integrating graphics data into a data stream representative of alphanumeric data.

U.S. Patent 4,272,767, R.H. Lacy, entitled "Display System for Displaying Information in the Form of a Horizontally Oriented Curve on a Raster-Type CRT", and issued Jun. 9, 1981. In this display terminal for showing both alphanumeric and graphic material, the alphanumerics are generated through character generation but the graphics of curves appear to be generated by some other means involving vectors.

Patent 4,338,599, S. Leininger, entitled "Apparatus for Alpha-Numeric/Grahic Display", and issued Jul. 6, 1982 covers a display for graphic and alphanumeric information. While the sort of character generation, the graphic data is displayed through a different scheme which does not appear to utilize character generation.

U.S. Patent 4,283,723, R.H. Bickley et al, entitled : Apparatus and Method for Providing Digital and/or Bar Graph Displays of Measured Quantities, and issued Aug. 11, 1981 appears to relate to a very specialized display forming both characters and simple bar graphs through a character generation method. However, the teaching is quite specialized and appears to be in no way suggestive of or related to the production of printed documents and particularly a word processing system controlling the printing of documents or the information of graphics on such documents.

Summary of the Present Invention

The present invention provides a solution to the problems involved in the editing of graphics material together with alphanumeric material in a word processing system by providing a word processing system with an interactive display terminal. The display terminal operates in the "character box" mode, i.e., displayed alphanumeric material is formed by character generation. The word processing system further includes a printer for printing the alphanumeric material and a non-character generating graphics producing apparatus such as a plotter to provide the graphics on the document. In order to format and edit the graphics material, the system further includes means for integrating into the data stream of alphanumeric characters, data which is representative of the graphics. For display purposes, the system converts this integrated graphic data into graphic display characters so that the graphics on the display is now formed through character generation or the character box method.

Upon the completion of the editing, the system has means for selectively applying the data in the data stream representative of the alphanumeric characters to printing means for printing the alphanumeric characters on the document and further to apply the data representative of the graphics to graphics producing means such as the plotter so that the graphics may now be formed on the document.

More particularly, the object of the invention is to provide a system as defined in Claims 1 and 6 which state two different implementations of the same invention.

Brief Description of the Drawings

Referring now to the drawings, wherein a preferred embodiment of the invention is illustrated, and wherein like reference numerals are used through out to designate like parts ;
Fig. 1 is a logical block diagram showing the apparatus of the present invention in a generalized form.
Fig. 2 is a logical block diagram showing the apparatus particularly in the memory portion of Fig.1 in greater detail so that the steps involved in the present invention may be understood.
Fig. 3 is a flow chart of the operation involved in the integrating of graphic data into a data stream representative of alphanumeric characters in accordance with the present invention.
Fig. 4 is a flow chart of the operations involved in the present invention in accessing a data stream containing the integrated alphanumeric and graphic information which has been stored on a diskette and for commencing the operation wherein this accessed data will be utilized to form an appropriate document containing the alphanumeric as well as the graphic information.
Fig. 5 is a flow chart of the operation involved in selectively applying the data representative of alphanumeric characters to alphanumeric print means and the data representative of graphics to graphic production means.

Best Mode for Carrying Out the Invention

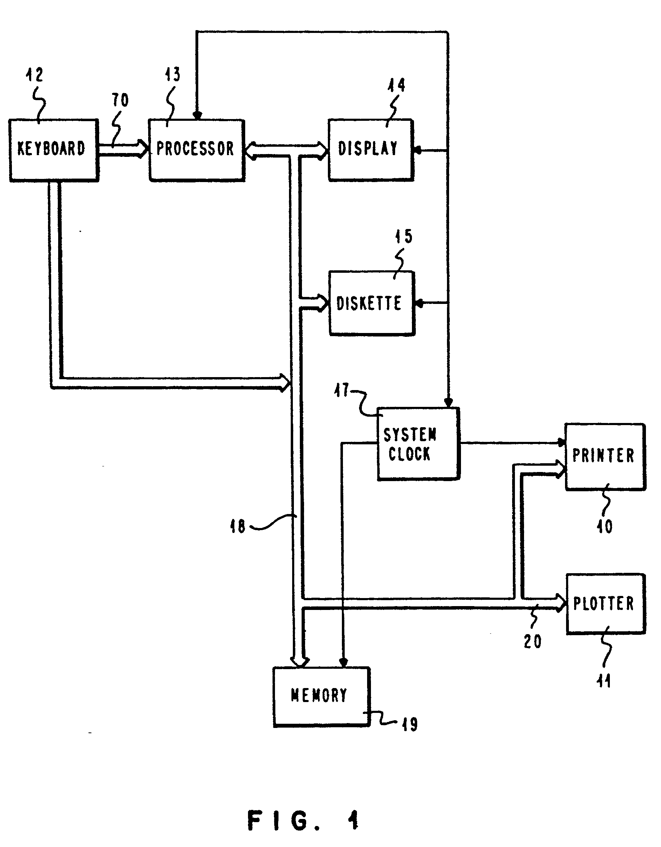

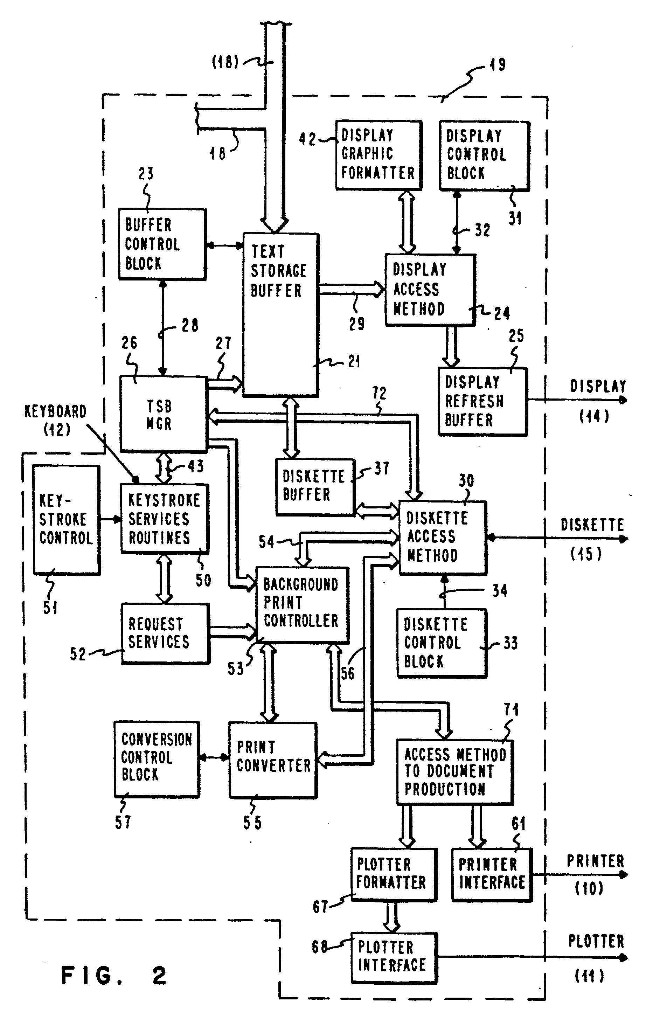

With reference to fig. 1, a generalized view of the apparatus which may be used to carry out the present invention is shown. The apparatus for carrying out this invention may be any conventional word or text processing system such as that described in European patent application document EP-A-0067288. In order to carry out the present invention, attached to the text processing system is a conventional printer 10 which may be any printer such as a daisy wheel printer which prints the alphanumeric text on the document to be produced character by character, i.e., in response to the coded representation of the next character to be printed in a particular data stream applied to the printer, a character is selected from the printer font. Also, connected to the text processing system is a plotter 11 which may be any conventional plotter having a stylus or like element which can access any position on a given document and means for moving the stylus in a vector from the initial point to form a graphic element ; the graphic image is, of course, formed by a series of such vector movements. In performing the operations to be subsequently described, the operator accesses the word processor through a keyboard 12. The keyboard drives an internal microprocessor 13 which is operably connected to the display terminal 14 as well as to diskette storage means 15. The keyboard is further connected to random access memory 19 through memory buss 18. A system clock 17 is provided for timing functions within the word processing system. Printer 10 and plotter 11 are communicated with over buss 20. The memory 19 provides means for storing data within the word processing system and also provides the programs for controlling display 14 to display data or control printer 10 to print data or plotter 11 to plot the data. Fig. 2 shows the elements of memory 19 pertinent to the present embodiment and particularly the functional programs which relate to the formatting of graphic data in the display, the integration of such graphic data with the alphanumeric data in the data stream supporting the display and the reproduction of such graphic data on a plotter. With respect to the general operation of the functional areas in memory 19 shown in Fig. 2, data input into memory is sent over buss 18 and stored in the text storage buffer 21 sequentially in the order in which it is received. The handling and updating of data stored in the text storage buffer 21 is controlled by routines stored within the text storage buffer manager (TSB) 26. Display access method program 24 controls the formatting of alphanumeric text representative of the data stored in the text storage buffer on visual display terminal 14 through display refresh buffer 25. It should be noted that the display refresh buffer 25 may operate in any conventional manner. However, in the present example, a "BUILD" subroutine is used which is described in European Patent application document EP-A-0052723.

Text storage buffer (TSB) manager block 26 is connected to text storage buffer 21 by buss 27. The text storage buffer manager block 26 is further connected to buffer control block 23 through a channel 28. As previously indicated, the data representative of the alphanumeric text characters is input into buffer 21. The data representative of characters is stored sequentially in text storage buffer 21 in the order in which it is received. For convenience in description, this data will be referred to as text character data. In displaying the characters, text character data stored in buffer 21 is communicated to display access method 24 over channel 29. It should be noted that corresponding diskette access method block 30 is used instead of access method block 24 when communication between the text storage buffer 21 and the diskette 15 is desired.

A display control block 31 is connected through a channel 32 with display access method block 24. The corresponding diskette control block 33 communicates with diskette access method 30 over channel 34 when access to the diskette drive is required.

Considering now the access of the operator through the keyboard, this involves standard keyboard entry steps. As the operator enters each key strokes at the keyboard 12, a corresponding signal is transmitted through channel 42 to processor 13 which enters the key stroke command into the memory 19. In the memory, upon the receipt of a key stroke command, a key stroke routine produced within the key stroke service routine block 50 is executed to handle the particular command received. This is carried out under the control of the key stroke control block 51. The key stroke command is then processed via channel 43 to the text buffer storage manager block 26 which has been programmed to control buffer control block 23 which carries out various processes with respect to the data stored in the text storage buffer 21.

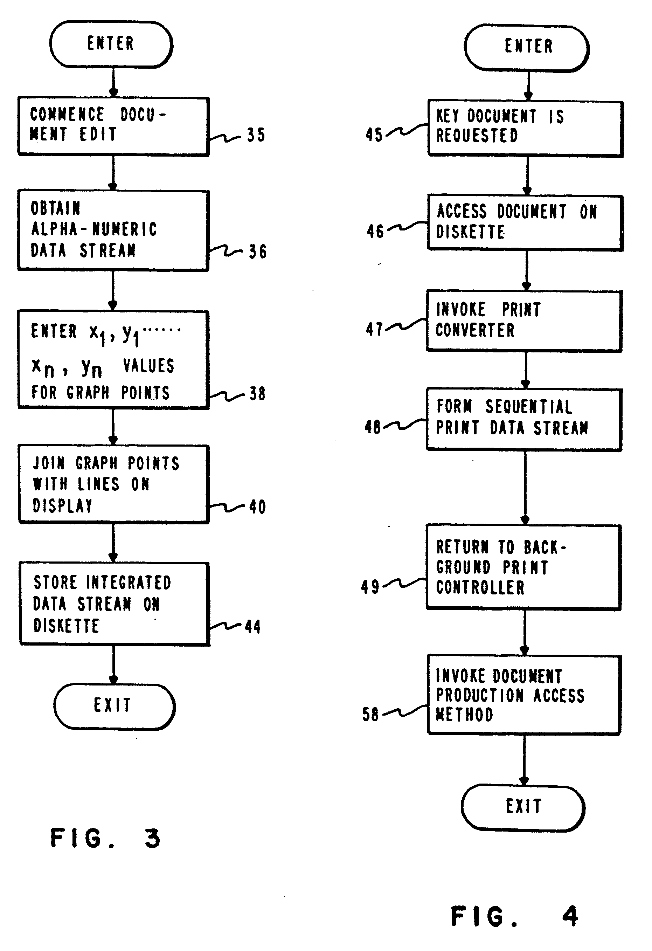

Using the standard logic and programming described above with respect to the Figs. 1 and 2 as well as additional logic and programming functions to be hereinafter described, the operation of the present invention will now be described with respect to steps set forth in the flow charts of Figs. 3 to 5. It should be noted that the logic and programming shown in Figs. 1 and 2 relates to the word processing display unit of the type described in European Patent application document EP-A-0052723. Let us assume that the alphanumeric data stream to be used in the printing operation has already been formatted in accordance with the procedure set forth in the referenced patent application and is stored in the diskette memory 15 of Fig. 1. The operator wishes to integrate graphic information into the alphanumeric data stream. The operator commences a document edit session, step 35, Fig. 3, by depressing the appropriate key in keyboard 12 which accesses key stroke service routine 50 in memory 19 through processor 13 of Fig. 1. As a result, step 36, the appropriate alphanumeric data stream is accessed from the diskette 15 through diskette access method 30, Fig. 2. This is brought about a communication from key stroke service routine 50 through channel 43 to TSB MGR 26 and proceeding through channel 72 to diskette access method 30. The resulting accessed alphanumeric data stream is read into diskette buffer 37 and then stored in text storage buffer 21 from which it is displayed on display 14 through display access method 24 and display refresh buffer 25 in the conventional manner. Next, step 38, the operator enters into the alphanumeric data stream code representative of alphanumeric statements defining the graphic. For purposes of the present example, we are assuming that the graphics are to consist of a simple line graph joining a plurality of points with the coordinates : $X_1$, $Y_1$ ; $X_2$, $Y_2$ ;...$X_n$, $Y_n$, step 38 to form a graphic structure, e.g., a pie-shaped chart.

Next, step 40, the entered data which is stored in the text storage buffer 21 is sent to display access method 24 which in turn sends the graphic data stream elements to the display graphic formatter 42, Fig. 2. The display graphic formatter 42 uses an interpretive approach wherein points represented by $X_1Y_1$ ; $X_2Y_2$ ;...$X_nY_n$ are shown on the display and joined by straight lines between the respective points. In doing such graphic formatting, any conventional formatting procedure may be used.

For a specific discussion of a conventional art procedure for such graphic formatting, please refer to IBM System Journal, Vol. 19, No. 3, 1980 article by D.F. McMarginal and D.A. Stevenson titled "Architecture of the IBM 3277 Graphics Attachment". On page 338 a graphics command decoder is described. It has been stated and described hereinabove that the alphanumeric data formed and edited on the word processor interactive display terminal of the present invention and currently being stored on diskette is character generation data.

An encoded representation of each of a font of alphanumeric characters which is stored in the character generator memory of the word processor, and as each character is to appear on the display during a display refresh cycle, the character generator memory is addressed and the coded representation of that particular character is taken from the memory and displayed in a particular and designated "character box" on the display. In carrying out the present invention, the graphics being formed or edited on the display terminal is similarly represented by a plurality of graphic characters whereby the graphics appearing on the display is also represented by a sequence of coded representations of characters which are taken out of memory and displayed in a particular designated "character box" on the display during display refresh cycle. Details of such a character generation graphic display system which may be used in the practice of the present invention are set forth in the european patent document EP-A-0128289 filed concurrently with the present invention. This referenced graphics display system is designed to operate on the same word processing display terminal used in the practice of the present invention. This european patent application provides for a font of characters which may be used on the display to produce rectilinear and curvilinear graphics.

At this point, step 44, the integrated data stream containing both the original alphanumeric information and the added graphics is sent from the text storage buffer 21 to the diskette 15 via the diskette buffer 37 and diskette access method 30. The editing function is thus completed and the process is exited from.

At a convenient time subsequently when it is desired to produce the document represented by the above described integrated data stream, the print request routine shown in Fig. 4 is invoked by the initial step 45 of the operator requesting the printing of a document through keyboard 12, key stroke services routine 50 and request services 52 through background print controller 53. Under the control of background print controller 53, the printing or production of the document will take place as a background task while the display may be utilized in foreground task involving editing of other text data. Under the control of the background printer controller 53, the above described document which has been stored on diskette 15 is accessed, step 46 of Fig. 4, via diskette access method 30 of Fig. 2 which is connected to background print controller 53 via buss 54. When the data representative of the desired document is thus accessed, the background print controller 53 invokes print converter 55 by step 47. As a result, the data stream representative of the document to be printed is applied to print converter 55 over buss 56 wherein it is stored in an internal input buffer in the converter. Printer converter 55 then proceeds to convert the data stored in the input buffer by reading the data stored in the input buffer and applying predetermined conversion algorithms and values stored in tables in conversion control block 57 to convert the data into a sequential print data stream which is applicable to document production access method utilized in the present system.

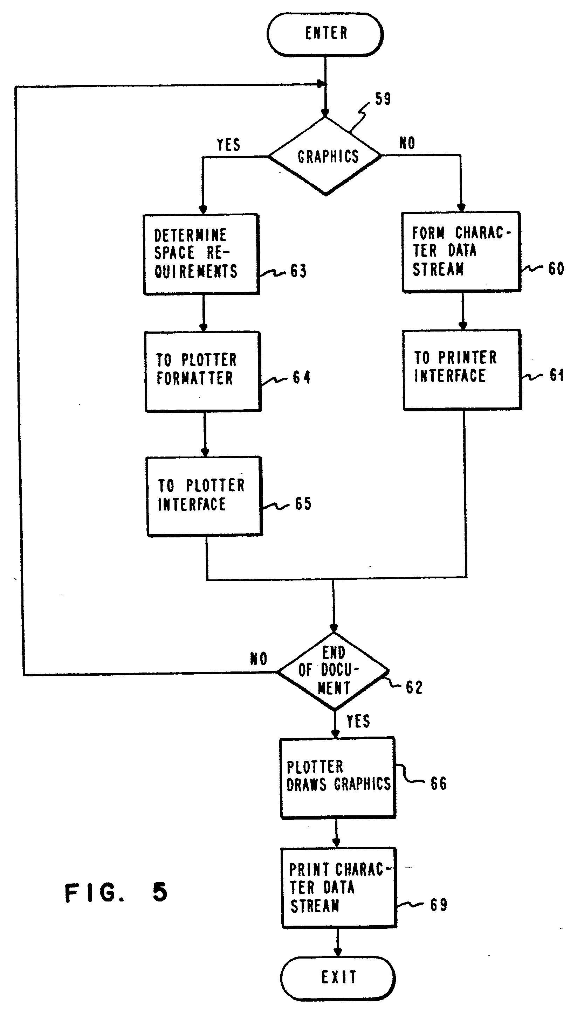

The sequential print data stream which is thus formed, step 48 of Fig. 4, also contains the integrated graphics information. The resulting sequential data stream is then stored in a suitable output buffer (not shown) associated with print converter 55 and, step 49, the process is returned to the background print controller 53. At this point, background print controller 53 invokes the document production access method, step 58. Then, under the control of this document production access method 71, Fig. 2, the process set forth in Fig. 5 involving the selective application of alphanumeric data to the printer and graphic data to a plotter is carried out.

First, step 59, a determination is made as to whether the next section of data in the data stream is representative of graphics or alphanumeric data. The data stream contains a series of prefixes which are used to identify the graphic and alphanumeric data and to distinguish such portions of the data stream from each other. If the data is not graphic in nature, then, step 60, the access method proceeds in a conventional manner to form a sequence or string of alphanumeric character printing commands which are in turn applied to a suitable printer interface 61. This character data stream will be stored in any conventional storage means at the printer interface so that when the print command is subsequently given, the alphanumeric portion of the document may be printed on printer 10. Next, decision step 62, a determination is made as to whether the end of the accessed document has been reached. If it has not, then the process is returned to decision block 59 where a determination is again made as to whether the next portion of the data is graphic or alphanumeric in nature. If the next portion of the data is graphic, then, a determination is made in the access method 71 as to the space requirement of the graphic material, step 63. This is based upon scanning the material, and determining the various coordinate points at the extremities of the graphic and allocating appropriate space on the document to accommodate such graphic material. Next, step 64, the graphic data is applied to plotter formatter 67 which converts the various coordinate and coordinate related information into an appropriate format sufficient to drive the particular plotter being utilized. The formatter 67 uses a conventional data stream interpreter to transform the graphic data stream elements into the device specific commands required by the specific plotter. An example of such a conventional device specific command stream is HP-GL which is supported by most Hewlett Packard Pen Plotters.

Next, a determination is made as to whether the end of the document has been reached, step 62. If it has, then, we are ready to produce the final document. This document production will require two operations, one on the plotter and one on the printer. First, the medium such as paper on which the document is to be formed is inserted into the plotter. The drawing of the graphic portion of the document on the plotter is then commenced, step 66. During the plotter drawing step, the plotter operates in its conventional manner to implement the formatted data for the plotter which has been stored at the plotter interface 68 of Fig. 2 in step 64. After all of the graphics have been formed on the plotter, the document is then transferred to the printer 10 where the data stream stored at the printer interface is now printed out, step 69, in conventional manner to produce the alphanumeric portion of the document. This combined plotting and printing operation may conveniently be carried out page by page on a document involving a plurality of pages.

## Claims

1. A word processing system comprising:

   interactive display terminal means for receiving data representative of alphanumeric characters and data representative of graphics, and for displaying alphanumeric characters and graphic information, said alphanumeric character data and said graphic data being handled in said system,

   means for integrating said alphanumeric character data and said graphic data from said terminal means into a data stream;

   means for generating said alphanumeric characters for display on said terminal means from said data representative of alphanumeric characters from said data stream;

   means for converting said data representative of graphics from said data stream into graphic characters and for providing said graphic character to said generating means to display said characters on said terminal means;

   means for selectively applying the data in said data stream representative of said alphanumeric characters to a printing means, and for selectively applying the data in said data stream representative of said graphics to a graphic producing means;

said printing means, responsive to the selectively applying means, for printing said alphanumeric characters on a document from said data representative of alphanumeric characters; and

said graphic producing means, responsive to the selectively applying means, for producing graphic information on said document from said data representative of said graphics.

2. Word processing system of claim 1 wherein said means for integrating the graphics data into said data stream include means for putting said graphics data into a form representative of graphic characters.

3. Word processing system of claim 1 or 2 wherein said illustrating means is non-character producing.

4. Word processing system of claim 3 wherein said illustrating means is a graphic plotter.

5. Word processing system of claim 4 wherein said illustrating means further include means for converting said data representative of said graphics from said form representative of graphic characters into a form not representative of graphic characters.

6. A word processing system comprising :

   interactive display terminal means for receiving data representative of alphanumeric characters and data representative of graphics, and for displaying alphanumeric characters and graphic display characters, said alphanumeric characters data and said graphic data being handled in said system

   means for integrating said alphanumeric character data and said graphic data from said terminal means into a data stream;

   means for generating said alphanumeric characters from said data representative of alphanumeric characters of said data stream and, for generating said graphic display characters from the data representative of graphics of said data stream;

means for selectively applying the data in said data stream representative of said alphanumeric characters to a printing means, and for selectively applying the data in said data stream representative of said graphics to a graphic producing means;

said printing means independent from said terminal means for printing said alphanumeric characters on a document from said data representative of alphanumeric characters; and

said graphic producing means independent from said terminal means and said printing means for producing graphic information on said document from said data representative of said graphics in a form different from said graphic display characters.

7. A word processing method for handling data representative of alphanumeric characters and data representative of graphics, comprising the steps of:

receiving data representative of alphanumeric characters and data representative of graphics and forming a data stream therefrom;

converting said data representative of said graphics from said data stream into graphic display characters;

displaying by character generation on an interactive display terminal, said data stream having data representative of alphanumeric characters and said graphics display characters;

producing said graphics on said document from said data representative of said graphics of the data stream in a form different from said graphics display characters, and

printing the data in said data stream representative of said alphanumeric characters on said document.

8. Word processing method of claim 7 wherein said step of converting the data representative of said graphic said data stream includes the step of putting said data representative of said graphics into a form representative of graphic characters.

**Revendications**

1. Système de traitement de texte comprenant :
   un moyen de terminal de visualisation interactif pour recevoir des données représentatives de caractères alphanumériques et des données représentatives de graphiques, et pour afficher les caractères alphanumériques et les informations graphiques, lesdites données de caractères alphanumériques et lesdites données de graphiques étant traitées dans ledit système ;
   un moyen pour intégrer lesdites données de caractères alphanumériques et lesdites données de graphiques depuis ledit moyen de terminal en un flux de données ;
   un moyen pour produire lesdits caractères alphanumériques pour affichage sur ledit moyen de terminal à partir desdites données représentatives des caractères alphanumériques depuis ledit flux de données ;
   un moyen pour convertir lesdites données représentatives des graphiques depuis le flux de données en caractères graphiques et pour fournir lesdits caractères graphiques audit moyen de génération afin d'afficher lesdits caractères sur ledit moyen de terminal ;
   un moyen pour appliquer sélectivement les données dans ledit flux de données représentatif desdits caractères alphanumériques à un moyen d'impression, et pour appliquer sélectivement les données dans ledit flux de données représentatif desdits graphiques à un moyen de production de graphiques ; ·
   ledit moyen d'impression, étant sensible au moyen d'application de manière sélective, servant à imprimer lesdits caractères alphanumériques sur un document depuis lesdites données représentatives des caractères alphanumériques ; et
   ledit moyen de production de graphique étant sensible au moyen d'application de manière sélective, servant à produire des informations graphiques sur ledit document depuis lesdites données représentatives desdits graphiques.

2. Système de traitement de texte selon la revendication 1, dans lequel ledit moyen pour intégrer les données graphiques dans ledit flux de données comporte un moyen pour mettre lesdites données graphiques sous une forme représentative des caractères graphiques.

3. Système de traitement de texte selon la revendication 1 ou 2, dans lequel ledit moyen d'illustration est non producteur de caractères.

4. Système de traitement de texte selon la revendication 3, dans lequel ledit moyen d'illustration est un traceur de graphiques.

5. Système de traitement de texte selon la revendication 4, dans lequel ledit moyen d'illustration comporte de plus un moyen pour convertir lesdites données représentatives des graphiques depuis ladite forme représentative des caractères graphiques en une forme non représentative des caractères graphiques.

6. Système de traitement de texte comprenant :

un moyen de terminal de visualisation interactif pour recevoir les données représentatives des caractères alphanumériques et les données représentatives des graphiques et pour afficher les caractères alphanumériques et les caractères d'affichage graphique, lesdites données de caractères alphanumériques et lesdites données de graphiques étant traitées dans ledit système ;

un moyen pour intégrer lesdites données de caractères alphanumériques et lesdites données de graphiques depuis le moyen de terminal en un flux de données ;

un moyen pour produire lesdits caractères alphanumériques depuis lesdites données représentatives des caractères alphanumériques dudit flux de données et, pour produire lesdits caractères d'affichage graphique depuis les données représentatives des graphiques dudit flux de données ;

un moyen pour appliquer sélectivement les données dans ledit flux de données représentatif desdits caractères alphanumériques à un moyen d'impression, et pour appliquer sélectivement les données dans ledit flux de données représentatif desdits graphiques à un moyen de production de graphiques ;

ledit moyen d'impression étant indépendant dudit moyen de terminal pour imprimer lesdits caractères alphanumériques sur un document depuis lesdites données représentatives des caractères alphanumériques ; et

ledit moyen de production de graphiques étant indépendant dudit moyen de terminal et dudit moyen d'impression pour produire des informations graphiques sur ledit document depuis lesdites données représentatives desdits graphiques sous une forme différente desdits caractères d'affichage graphique.

7. Procédé de traitement de texte pour traiter des données représentatives de caractères alphanumériques et de données représentatives de graphiques, comprenant les étapes consistant à :

recevoir des données représentatives de caractères alphanumériques et des données représentatives de graphiques et former un flux de données à partir de celles-ci ;

convertir lesdites données représentatives desdits graphiques depuis ledit flux de données en caractères d'affichage graphique ;

afficher par génération de caractères sur un terminal de visualisation interactif ledit flux de données ayant des données représentatives des caractères alphanumériques et lesdits caractères d'affichage graphiques ;

produire lesdits graphiques sur ledit document depuis lesdites données représentatives desdits graphiques du flux de données sous une forme différente desdits caractères d'affichage graphique ; et

imprimer les données dans ledit flux de données représentatives desdits caractères alphanumériques sur ledit document.

8. Procédé de traitement de texte selon la revendication 7, dans lequel ladite étape consistant à convertir les données représentatives desdits graphiques dudit flux de données comporte l'étape de mettre lesdites données représentatives desdits graphiques sous une forme représentative de caractères graphiques.

**Patentansprüche**

1. Textverarbeitungssystem, das aufweist:

interaktive Datensichtstationmittel zum Empfangen alphanumerische Zeichen repräsentierender Daten und Graphik repräsentierender Daten und zum Anzeigen alphanumerischer Zeichen und von Graphikinformationen, wobei die Daten für alphanumerische Zeichen und die Daten für Graphik in dem System bearbeitet werden,

Mittel zum Eingliedern der Daten für alphanumerische Zeichen und der Daten für Graphik aus dem Datenstationmitteln in einen Datenstrom,

Mittel zum Erzeugen der alphanumerischen Zeichen für eine Anzeige auf den Datenstationmitteln aus den Daten, die alphanumerische Zeichen aus dem Datenstrom repräsentieren,

Mittel zum Umwandeln der Graphik repräsentierenden Daten aus dem Datenstrom in Graphikzeichen und zum Liefern der Graphikzeichen an die Mittel zum Erzeugen, um die Zeichen auf dem Datenstationmitteln anzuzeigen,

Mittel zum selektiven Zuführen der Daten in dem Datenstrom, welche die alphanumerischen Zeichen repräsentieren, einem Druckermittel und zum selektiven Zuführen der Daten in dem Datenstrom, welche die Graphik repräsentieren, einem Graphikerzeugermittel,

die Druckermittel, die auf die Mittel zum selektiven Zuführen ansprechen, um die alphanumerischen Zeichen aus den alphanumerische Zeichen repräsentierenden Daten auf einem Dokument zu drucken und

die Graphikerzeugermittel, die auf die Mittel zum selektiven Zuführen ansprechen, um Graphikinformationen aus den Graphik repräsentierenden Daten auf dem Dokument zu erzeugen.

2. Textverarbeitungssystem nach Anspruch 1, bei welchem die Mittel zum Eingliedern der Graphikdaten in den Datenstrom Mittel aufweisen, um die Graphikdaten in eine Graphikzeichen repräsentierende Form zu bringen.

3. Textverarbeitungssystem nach Anspruch 1 oder 2, bei welchem das Graphikmittel kein Zeichen erzeugt.

4. Textverarbeitungssystem nach Anspruch 3, bei welchem das Graphikmittel ein Graphikplotter ist.

5. Textverarbeitungssystem nach Anspruch 4, bei welchem die Graphikmittel ferner Mittel zum Umwandeln der Graphik repräsentierenden Daten aus der Graphikzeichen repräsentierenden Form in eine Form aufweist, die keine Graphikzeichen repräsentiert.

6. Textverarbeitungssystem, das aufweist:

interaktive Datensichtstationmittel zum Empfangen alphanumerische Zeichen repräsentierender Daten und Graphik repräsentierender Daten und zum Anzeigen alphanumerischer Zeichen und von Graphikanzeigezeichen, wobei die Daten für alphanumerische Zeichen und die Daten für Graphik in dem System bearbeitet werden,

Mittel zum Eingliedern der Daten für alphanumerische Zeichen und der Daten für Graphik aus dem Datenstationmitteln in einen Datenstrom,

Mittel zum Erzeugen der alphanumerischen Zeichen aus den alphanumerische Zeichen des Datenstroms repräsentierenden Daten und zum Erzeugen der Graphikanzeigezeichen aus die Graphik des Datenstroms repräsentierenden Daten,

Mittel zum selektiven Zuführen der Daten in dem Datenstrom, welche die alphanumerischen Zeichen repräsentieren, einem Druckermittel und zum selektiven Zuführen der Daten in dem Datenstrom, die Graphik repräsentieren, einem Graphikerzeugermittel, die von den Datenstationmitteln unabhängigen Druckermittel, um die alphanumerischen Zeichen aus den alphanumerische Zeichen repräsentierenden Daten auf einem Dokument zu drucken und

die von den Datenstationmitteln und den Druckermitteln unabhängigen Graphikerzeugermittel, um Graphikinformationen aus den die Graphik in einer Form repräsentierenden Daten auf einem Dokument zu erzeugen, die von den Graphikanzeigezeichen verschieden ist.

7. Textverarbeitungsverfahren zum Bearbeiten alphanumerische Zeichen repräsentierender Daten und Graphik repräsentierender Daten, welches die Schritte umfaßt:

Empfangen alphanumerische Zeichen repräsentierender Daten und Graphik repräsentierender Daten und Bilden eines Datenstroms daraus,

Umwandeln der die Graphik repräsentierenden Daten aus dem Datenstrom in Graphikanzeigezeichen,

Anzeigen des Datenstroms mit Daten durch Zeichenerzeugung auf einer interaktiven Datensichtstation, die alphanumerische Zeichen und die Graphikanzeigezeichen repräsentieren,

Erzeugen der Graphik auf dem Dokument aus den Daten, welche die Graphik des Datenstroms in einer Form repräsentieren, die von den Graphikanzeigezeichen verschieden ist und

Drucken der Daten in dem Datenstrom auf dem Dokument, welche die alphanumerischen Zeichen repräsentieren.

8. Textverarbeitungsverfahren nach Anspruch 7, bei welchem der Schritt des Umwandelns der Graphik repräsentierenden Daten aus dem Datenstrom den Schritt um die die Graphik repräsentierenden Daten in eine Form zu bringen, die Graphikzeichen repräsentiert, umfaßt.

**FIG. 1**

FIG. 2

ENTER

| COMMENCE DOCU-MENT EDIT | 35 |

| OBTAIN ALPHA-NUMERIC DATA STREAM | 36 |

ENTER $x_1, y_1 \cdots$ $x_n, y_n$ VALUES FOR GRAPH POINTS — 38

| JOIN GRAPH POINTS WITH LINES ON DISPLAY | 40 |

| STORE INTEGRATED DATA STREAM ON DISKETTE | 44 |

EXIT

**FIG. 3**

ENTER

| 45 | KEY DOCUMENT IS REQUESTED |

| 46 | ACCESS DOCUMENT ON DISKETTE |

| 47 | INVOKE PRINT CONVERTER |

| 48 | FORM SEQUENTIAL PRINT DATA STREAM |

| 49 | RETURN TO BACK-GROUND PRINT CONTROLLER |

| 58 | INVOKE DOCUMENT PRODUCTION ACCESS METHOD |

EXIT

**FIG. 4**

**FIG. 5**